Europäisches Patentamt

European Patent Office

Office européen des brevets

(11) Veröffentlichungsnummer : **0 037 984**
B1

# EUROPÄISCHE PATENTSCHRIFT

(45) Veröffentlichungstag der Patentschrift :
11.05.83

(51) Int. Cl.³ : **B 29 B  1/10, B 29 F  3/02**

(21) Anmeldenummer : 81102516.2

(22) Anmeldetag : 03.04.81

(54) Gleichsinnig rotierbare Doppelschnecke.

(30) Priorität : 16.04.80 DE 3014643

(43) Veröffentlichungstag der Anmeldung :
21.10.81 Patentblatt 81/42

(45) Bekanntmachung des Hinweises auf die Patenterteilung : 11.05.83 Patentblatt 83/19

(84) Benannte Vertragsstaaten :
DE FR GB IT NL

(56) Entgegenhaltungen :
US A 2 670 188
US A 3 122 356

(73) Patentinhaber : BAYER AG
Zentralbereich Patente, Marken und Lizenzen
D-5090 Leverkusen 1, Bayerwerk (DE)

(72) Erfinder : Löhr, Karl-Dieter, Dr.
Zum Wald 25
D-4234 Alpen (DE)
Erfinder : Ullrich, Martin, DI.
Mendelssohnstrasse 32
D-5090 Leverkusen (DE)
Erfinder : Tresper, Erhard, Dr.
Dahlerdyk 154
D-4150 Krefeld (DE)

EP 0 037 984 B1

**0 037 984**

## Gleichsinnig rotierbare Doppelschnecke

Die Erfindung betrifft eine gleichsinnig rotierbare Doppelschnecke zum Aufschmelzen, Mischen, Zerteilen, Scheren und Energieeinleiten, bestehend aus einem im Querschnitt achtartigen Gehäuse mit kreisförmigen, exzentrisch gelagerten, rotierbaren Knetscheiben.

Bekannt sind, z. B. aus der amerikanischen Patentschrift US-A-3.122.356, kreisrunde, exzentrisch gelagerten Knetscheiben, die wendeltreppenartig gegeneinander versetzt auf in den beiden Kreismittelpunkten des Gehäuses verlaufenden Wellen befestigt sind, wobei sich die Knetscheiben untereinander bzw. mit der Gehäusewandung entlang einer wandernden Linie annähernd berühren.

Der Nachteil hierbei ist, daß durch die Knetscheiben feste Polymere beim Fördern und Aufschmelzen eingeklemmt werden, so daß — entgegen den sonst bei gleichsinnigen Doppelschnecken ausgeglichenen Kräfteverhältnissen infolge Selbstzentrierung durch am Umfang gleichmäßig verteilte Radikalkräfte — einseitig gerichtete Beanspruchungen der Knetscheibe auftreten können, die sowohl zu hohem Metallabrieb im Stoff als auch zu großem Maschinenverschleiß führen können. Weiter weicht der bearbeitete Stoff im plastischen Zustand dem Quetscheffekt axial aus. Damit entzieht sich der größte Teil des den Raum teilweise oder vollständig ausfüllenden Materials der an sich beabsichtigten Scherbeanspruchung, während ein kleiner Teil überbeansprucht wird.

Der Erfindung liegt die Aufgabe zugrunde, eine verschleißarme Schneckenmaschine zum stoffschonenden Plastifizieren unter gleichmäßiger Scherbeanspruchung des gesamten Stoffvolumens zu finden.

Die Aufgabe wird erfindungsgemäß dadurch gelöst, daß das Spiel zwischen den Knetscheiben und der Wandung des Gehäuses größer als das während der Rotation konstante Spiel der zusammenwirkenden Knetscheiben untereinander ist, wobei die jeweils gleichgerichtete Exzentrizität vom Kreismittelpunkt des Gehäuses zum Mittelpunkt einer Knetscheibe kleiner als die halbe absolute Differenz beider Durchmesser abzüglich des Spiels der zusammenwirkenden Knetscheiben ist.

Für den Fachmann ist überraschend, daß durch die Änderung der vorbekannten Doppelschnecke bei vergleichbaren Maschinenvolumen, gleicher Drehzahl und entsprechendem Durchsatz die Mischqualität und die Gleichmäßigkeit der Zerkleinerung von Feststoffteilchen bzw. -agglomeraten bedeutend verbessert ist, obgleich eine Qualitätseinbuße naheliegen würde, da auf die Selbstreinigung der Wände des Gehäuses verzichtet wird.

Während bei dem schon bekannten Apparat ein deutlicher offener Schneckenkanal vorhanden und damit intensive Axialförderung der gesamten Masse gegeben ist, werden durch die neue Vorrichtung längere Produktwege senkrecht zur Förderrichtung erzwungen. Hierdurch werden bei praktisch gleicher mittlerer Verweilzeit größere Umlagerungen von Teilmengen verbunden mit einer verbesserten Mischwirkung erzielt. Ein weiterer Vorteil der erfindungsgemäßen Vorrichtung ergibt sich für den Aufschmelzbereich. Durch die beabsichtigte Öffnung des Keilspaltes werden dabei die zwischen Feststoff- und Metalloberflächen wirksamen Druck- bzw. Radialkräfte zugunsten von Schubkräften abgebaut. Hierdurch wird das zu verarbeitende Material gleichmäßiger und schonender aufgeschmolzen und die metallische Berührung der Schnecken- und Gehäuseoberfläche vermieden. Durch geringeren Verschleiß wird eine höhere Lebensdauer des Apparates erzielt.

In einer besonderen Ausführungsform sind ein- oder mehrgängige Schneckengewinde mit Zonen aus Knetscheiben kombiniert, wobei der freie Querschnitt zwischen Knetscheiben und Gehäuse jeweils reduziert ist.

Durch die Reduktion der Produktquerschnittsfläche im Bereich der Knetscheiben im Verhältnis zu dem Bereich des Schneckengewindes wird eine verstärkte Füllung und eine intensivere Produktverdichtung erzielt.

In einer weiteren Ausführungsform sind Zonen aus Knetscheiben mit Zonen aus annähernd wandabstreifenden Exzentern kombiniert.

Durch diese Vorrichtung werden die misch- und knettechnischen Vorzüge der erfindungsgemäßen Exzenterzone mit den guten Fördereigenschaften bekannter, wandabstreifender Exzenter verbunden.

Ein Ausführungsbeispiel der Erfindung ist in den Zeichnungen dargestellt und wird im folgenden näher beschrieben. Es zeigen :

Figur 1 Querschnitt durch ein Paar Knetscheiben und das Gehäuse

Figur 2 Längsschnitt durch die Knetscheiben und das Gehäuse.

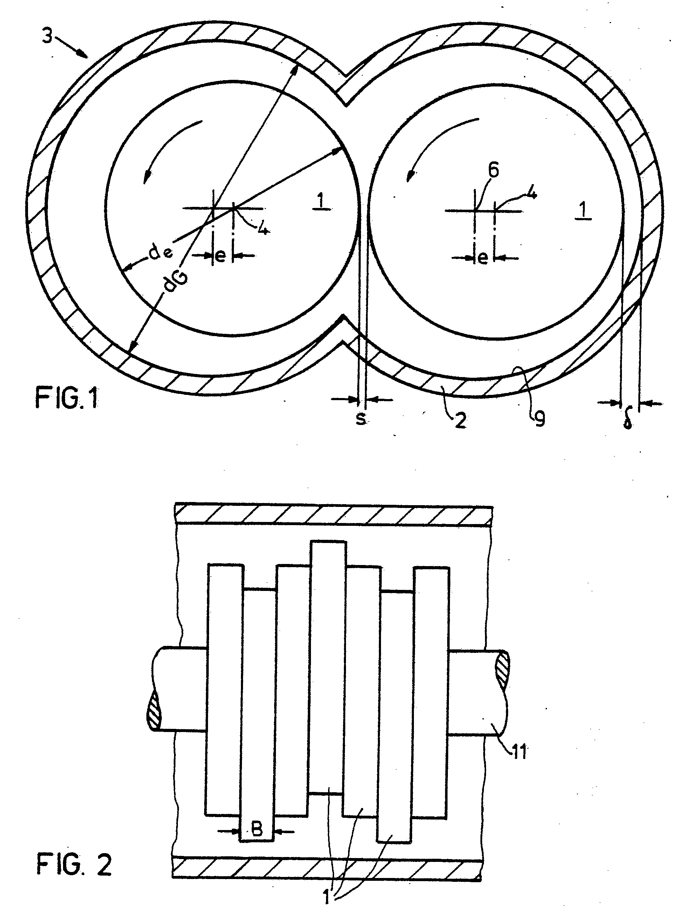

In Fig. 1 sind zwei kreisrunde Knetscheiben 1 in einem Gehäuse 2, dessen Innenraum aus zwei sich schneidenden Kreisen in Form einer Acht 3 geformt ist, dargestellt. Die Mittelpunkte 4 der Knetscheiben 1 sind in einer Richtung um eine Exzentrizität e zu den Kreismittelpunkten 6 versetzt. Das Spiel s zwischen den Knetscheiben 1 ist konstant, während das Spiel δ zur Wandung 9 bedingungsgemäß immer größer als s ist.

In Fig. 2 sind Knetscheiben 1, die sich um die Achse 11 drehen, im Längsschnitt angegeben, deren Verhältnis Breite B zum Durchmesser de der Knetscheibe 1 0,05 bis 5, vorzugsweise 0,1 bis 1 beträgt.

## Beispiel

Für eine Doppelschnecke ergeben sich folgende Grenzwerte, wobei ein bevorzugter Bereich —

ausgehend vom gleichen Gehäuse — in den beiden letzten Spalten genannt ist, der eine besonders gute Ausbeute zeigt. Doppelschnecken dieser Ausführung wurden zur Plastifizierung und zum Einfärben thermisch empfindlicher Thermoplaste z. B. ABS bzw. kautschukmodifizierte Mischpolymere eingesetzt.

| | | | | | | |
|---|---|---|---|---|---|---|
| Gehäusekreisdurchmesser | $d_G$ | [mm] | 57 | 57 | 57 | 57 |
| Knetscheibendurchmesser | $d_e$ | [mm] | 47,5 | 47,5 | 47,5 | 47,5 |
| Abstand der Drehpunkte der Knetscheiben | A | [mm] | 48 | 48 | 48 | 48 |
| Spiel der Knetscheiben | s | [mm] | 0,5 | 0,5 | 0,5 | 0,5 |
| Spiel von Knetscheibe-Wand | δ | [mm] | 0,6 | 4,65 | 1,5 | 3,5 |
| Exzentrizität | e | [mm] | 4,15 | 0,1 | 3,25 | 1,25 |

**Ansprüche**

1. Gleichsinnig rotierbare Doppelschnecke zum Aufschmelzen, Mischen, Zerteilen, Scheren und Energieeinleiten, bestehend aus einem im Querschnitt achtartigen Gehäuse (2) mit kreisförmigen, exzentrisch gelagerten, rotierbaren Knetscheiben (1), dadurch gekennzeichnet, daß das Spiel (δ) zwischen den Knetscheiben und der Wandung (9) des Gehäuses (2) größer als das während der Rotation konstante Spiel (s) der zusammenwirkenden Knetscheiben (1) untereinander ist, wobei die jeweils gleichgerichtete Exzentrizität (e) vom Kreismittelpunkt (6) des Gehäuses (2) zum Mittelpunkt (4) einer Knetscheibe (1) kleiner als die halbe absolute Differenz beider Durchmesser ($d_G$, $d_e$) abzüglich des Spiels (s) der zusammenwirkenden Knetscheiben (1) ist.

2. Gleichsinnig rotierbare Doppelschnecke nach Anspruch 1, dadurch gekennzeichnet, daß ein oder mehrgängige Schneckengewinde mit Zonen aus Knetscheiben (1) kombiniert sind, wobei der freie Querschnitt zwischen Knetscheibe (1) und Gehäuse (2) jeweils reduziert ist.

3. Gleichsinnig rotierbare Doppelschnecke nach Anspruch 1, dadurch gekennzeichnet, daß Zonen aus Knetscheiben (1) mit Zonen aus annähernd wandabstreifenden Exzentern kombiniert sind.

**Claims**

1. Twin-screw machine, the screws of which can rotate in the same direction, for melting, mixing, dispersing, shearing and imparting energy, consisting of a housing (2) which has a figure-of-eight cross-section and contains circular eccentrically arranged kneading discs (1) which can be rotated, characterised in that the clearance (δ) between the kneading discs and the wall (9) of the housing (2) is greater than the clearance (s), which is constant during the rotation, between the coacting kneading discs (1), the eccentricity (e), which is in each case of like orientation, from the central point (6) of the housing (2) to the central point (4) of a kneading disc (1) being less than half the absolute difference between the two diameters ($d_G$, $d_e$) minus the clearance (s) between the coacting kneading discs (1).

2. Twin-screw machine, the screws of which can rotate in the same direction, according to Claim 1, characterised in that single-flight or multi-flight screw threads are combined with zones of kneading discs (1), the free cross-section between the kneading disc (1) and the housing (2) being reduced in each case.

3. Twin-screw machine, the screws of which can rotate in the same direction, according to Claim 1, characterised in that zones of kneading discs (1) are combined with zones of eccentric discs which almost scrape the wall.

**Revendications**

1. Vis sans fin double pouvant tourner dans le même sens destinée à la fusion, au mélange, à la fragmentation, au cisaillement, et à l'introduction d'énergie, et constituée par une enveloppe (2) ayant une section transversale en forme de huit avec des disques malaxeurs (1) rotatifs circulaires et montés excentriquement, caractérisée en ce que le jeu (δ) entre les disques malaxeurs et la paroi (9) de l'enveloppe (2) est plus important que le jeu (s) constant pendant la rotation des disques malaxeurs (1) coopérant l'un par rapport à l'autre ; l'excentricité (e) respectivement dirigée dans le même sens depuis le centre de cercle (6) de l'enveloppe (2) jusqu'au centre (4) d'un disque malaxeur (1) étant plus faible que la moitié de la différence absolue des deux diamètres ($d_G$, $d_e$) par rapport au jeu (s) des disques malaxeurs coopérants (1).

2. Vis sans fin double pouvant tourner dans le même sens selon la revendication 1, caractérisée en ce qu'on combine des filets de vis sans fin à une ou plusieurs spires avec des zones de disques malaxeurs (1), la section transversale libre entre disques malaxeurs (1) et la paroi (2) étant respectivement réduite.

3. Vis sans fin double pouvant tourner dans le même sens selon la revendication 1, caractérisée en ce que des zones de disques malaxeurs (1) sont combinées avec des zones d'excentriques qui raclent approximativement la paroi.

FIG.1

FIG. 2